# EUROPEAN PATENT SPECIFICATION

(11) **EP 1 377 639 B1**
(45) Date of publication and mention of the grant of the patent: **22.05.2013**
(21) Application number: 02730131.6
(22) Date of filing: 09.04.2002
(51) Int. Cl.: C09D 195/00, C08L 23/02, C08L 53/02, C08L 95/00

(54) **PIPE COATING**
ROHRBESCHICHTUNG
REVETEMENT DE CONDUITS

(30) Priority: 12.04.2001 EP 01303460
(43) Date of publication of application: 07.01.2004
(73) Proprietor: Shell Internationale Research Maatschappij B.V., 2596 HR Den Haag (NL)
(72) Inventor: MULDER, Evert Alan, London SE1 7NA (GB)
(86) International application number: PCT/EP2002/003938
(87) International publication number: WO 2002/083793

(56) References cited:
- EP-A- 0 329 836
- EP-A- 0 667 374
- US-A- 4 973 615

## Description

This invention relates to a pipe coating, a process for coating pipes, and the use of a bitumen composition as a pipe coating

### Background of the Invention

Pipelines are efficient means for the transportation of gaseous, liquid and slurried materials over long or short distances with minimum impact on the environment. Long and large diameter pipelines are usually made from carbon steel, an iron based material, which is subject to corrosion. The corrosion process is a naturally occurring one in which the iron reverts to its oxide through the effects of water and oxygen from the air. This process affects nearly all iron structures, above ground, below ground and in water. Structures which are accessible and above ground may be maintained by regular painting or by some other form of coating. Pipelines are, however, rarely accessible and must be protected from their environment for the whole of their service life by a suitable corrosion resistant coating. One commonly used means of corrosion protection is the use of a thick bituminous enamel coating reinforced with a glass fibre or polyester wrap and optionally coated with a concrete coating for mechanical protection. As further insurance against corrosion such a high integrity coating can further be supported by the use of cathodic protection.

Pipe coatings can further have an advantageous insulating effect.

Whilst bitumen is in many respects naturally suitable for use in pipe coating, it is inherently deficient in some physical properties, which it would be highly desirable to improve.

Bitumen to be used in pipe coatings must meet a particularly stringent set of requirements such as good impact resistance and good flexibility. Good impact resistance is required as pipes, and their coatings, are susceptible to accidental damage when in transit, when being laid or when in use. Good flexibility is required as pipes are often subjected to a degree of bending when being laid and it is important that the pipe coating does not crack.

Further, it is advantageous if a bitumen composition for use as a pipe coating has a good high temperature performance as some pipelines are designed to carry hot materials. In such condition, bitumen compositions used as pipe coatings tend to sag or slip from the piping. This leads to deformation of the pipe coating and to a loss of performance.

Efforts have been made to modify the properties of bitumen by addition of polymers including certain conjugated diene rubbers, ethylene containing plastics like ethylene vinyl acetate copolymers (EVA), neoprene, and amorphous polyolefins. Styrenic block copolymers, such as styrene-butadiene-styrene and styrene-isoprene-styrene block copolymers have been widely used as such bitumen modifiers. However, the block copolymers, especially those in which the diene block has been hydrogenated, are sometimes incompatible with bitumen. Incompatibility is most common with harder grades of bitumen and this has limited the use of styrenic block copolymers in pipe coatings, especially in pipe coatings for high temperature applications.

One instance of a pipe coating comprising a styrenic block copolymer is provided in WO 92/06141, which describes a method of protecting materials such as pipes using a polymer modified enamel. The bitumen enamels of WO 92/06141 are described as being modified with one or more polymers selected among vinyl-butadiene block copolymers optionally combined with polyolefins, it being stated at page 7, lines 24 to 29, that the vinyl-butadiene block copolymer is preferably a mixture of linear and branched vinyl-butadiene block copolymers. The description of the block copolymers to be used in the enamels of WO 92/06141 relates entirely to non-hydrogenated block copolymers. With regard to the optional polyolefin, it is stated at page 12, lines 7 to 8, that the block copolymers are usually used combined with atactic polypropylene.

Indeed, the only bitumen enamel described in WO 92/06141-comprises a non-hydrogenated linear styrene-butadiene-styrene block copolymer, a non-hydrogenated branched styrene-butadiene-styrene block copolymer and an amorphous polyolefin (see page 17 lines 15 to 19, and page 18, lines 1 to 7). However, it has been found that such bitumen enamels have the disadvantage that their performance at high temperature is not always adequate.

WO 96/07846 describes an off-shore pipeline insulated with a bituminous composition. It is mentioned in WO 96/07846 that polymeric modifiers may be used to extend the temperature range over which bitumen remains dimensionally stable and that atactic polypropylene can raise the softening point without raising the point of embrittlement; the softening point increasing rapidly through a transition range where the concentration of atactic polypropylene is in the range of 18 to 30% of the weight of the composition (page 17, lines 26 to 32). It is stated that above this range further increases in softening point can be achieved by adding a low molecular weight isotactic polypropylene but that in the absence of atactic polypropylene, isotactic polypropylene mainly acts as a particulate filler; a cost-effective composition being described as containing 77% bitumen, 18% atactic polypropylene and 5 % isotactic polypropylene (page 17, line 36 to page 18, line 8).

WO-96 /07846 further mentions that styrene block copolymers may be added to the compositions to offset any embrittlement. No further information is given on the styrene block copolymers other than that they are best used sparingly (page 18, lines 18 to 25).

Therefore, from the teaching of WO 96 /07846 the person skilled in the art would be led to conclude that if the softening point of a bitumen enamel is to be increased, an amount of atactic polypropylene equivalent to at least 18 % by weight of the composition should be added; that when exceptionally large amount of atactic polypropylene are employed a low molecular weight isotactic polypropylene may be optionally included; and that if the resulting compositions are too brittle a non-hydrogenated styrene block copolymer may be optionally added.

WO 00/55271 relates to a pipe coating comprising a bitumen composition obtainable by mixing a bitumen and a premixed additive comprising i) one or more block copolymers of a vinyl aromatic hydrocarbon and a conjugated diene, ii) carbon black, and iii) a mixing aid. In one embodiment the premixed additive comprises a hydrogenated block copolymer, carbon black and an amorphous polyolefin (page 13, lines 10 to 15). Whilst the pipe-coatings of WO 00/55271 display exceptional high temperature performance, their use requires both a pre-mixing step and the presence of carbon black.

EP-A-329836 describes a bituminous composition of use as a roofing material which bituminous composition may be adhered to a roof surface by means of a "hot mopping procedure". The composition comprises a blend of: (a) from about 40% to about 98% by weight of bitumen; (b) from about 1% to about 30% by weight of a polyolefin and (c) from about 1% to about 30% by weight of a thermoplastic elastomer containing at least two polymer blocks, wherein one of said polymer blocks is a crystalline polymer block having Tm above 40°C and one of said polymer blocks is an amorphous polymer block having a Tg of 0°C or lower, and wherein the weight ratio of crystalline polymer block to amorphous polymer block is within the range of from 10:90 to 80:20. In the compositions exemplified in EP-A-329836, the polyolefin is either a high density polyethylene having an MI of 40, or an atactic polypropylene; whilst the thermoplastic elastomer is a hydrogenated block copolymer. The block copolymer must have an amorphous block and a crystalline block. D3 and D2 teach that the crystalline block suitably is a hydrogenated block of polybutadiene and the amorphous block is a hydrogenated block of a random copolymer of a vinyl arene (e.g. styrene) and 1,3-butadiene. EP-A-329836 does neither disclose nor teach that such compositions may be used in pipe coatings.

It would be advantageous if there was provided a pipe coating which could be prepared simply, having good impact resistance and flexibility, and which also displays good high temperature performance.

### Summary of the Invention

It has now surprisingly been found that a pipe coating based on a bitumen composition comprising a hydrogenated styrenic block copolymer and a stereoregular polyolefin, has advantageous impact resistance, flexibility and high temperature performance characteristics when compared with known pipe coatings based on combinations of non-hydrogenated styrenic block copolymers and amorphous polyolefins.

Accordingly, the present invention provides a pipe coating which comprises a bitumen composition comprising in the range of from 20 to 98 % by weight of a bitumen, in the range of from 0.5 to 30 % by weight of a block copolymer of a vinyl aromatic hydrocarbon and a conjugated diene which block copolymer comprises at least two terminal poly(monovinyl aromatic hydrocarbon) blocks and at least one central poly(conjugated diene) block wherein the diene block of the block copolymer is hydrogenated, and in the range of from 0.5 to 30% by weight of a stereoregular polyolefin, all weights based on total bitumen composition.

### Detailed description of the Invention

The bitumen compositions on which the pipe coatings of the present invention are based comprise in the range of from 20 to 98 % by weight, preferably from 30 to 90%, more preferably from 40 to 80%, even more preferably from 50 to 70 % and most preferably from 55 to 60% by weight of a bitumen, based on total weight of bitumen composition.

The bitumen in the bitumen compositions may be a naturally occurring bitumen or a bitumen derived from a mineral oil. Also, petroleum derivatives obtained by a cracking process, pitch and coal tar can be used as the bitumen as well as blends of various bitumen.

Examples of suitable bitumen include distillation or "straight-run" bitumen, precipitation bitumen, e.g. propane bitumen, blown bitumen and mixtures thereof. Other suitable bitumen include mixtures of one or more of these bitumen with extenders such as petroleum extracts, e.g. aromatic extracts, distillates or residues, or with oils. Preferred bitumen according to the present invention are distillation bitumen and propane bitumen, propane bitumen being particularly preferred.

Preferred bitumen are bitumen having a penetration in the range of from 5 to 100 dmm (measured according to BS 2000: Part 49 at 25°C), more preferably bitumen having a penetration from 10 dmm to 60 dmm, more preferably from 10 dmm to 30 dmm, and most preferably from 10 dmm to 20 dmm.

The softening point of the bitumen (measured according to BS 2000: Part 58) is preferably in the range of from 50 to 120 °C, more preferably from 55 to 100 °C and most preferably from 55 to 80 °C.

The bitumen compositions on which the pipe coatings of the present invention are based preferably comprise in the range of from 2 to 12 % by weight of a block copolymer of a vinyl aromatic hydrocarbon and a conjugated diene wherein the diene block of the block copolymer is hydrogenated, more preferably from 4 to 10 %, even more preferably from 6 to 10 % and most preferably from 7 to 9%, all weights based on total amount of bitumen composition.

The block copolymers of the present invention comprise at least two terminal poly(monovinyl aromatic hydrocarbon) blocks and at least one central poly(conjugated diene) block, forming a continuous network.

The block copolymers for use in the present invention may be linear or radial and preferably have the structure A-B-A or (A-B)nY, with n being an integer from 2 to 100, preferably 2 to 20, more preferably 2 to 6 and Y being the residue of a coupling agent; wherein A is a poly(monovinyl aromatic hydrocarbon) block and B is a poly(conjugated diene) block, which has been hydrogenated.

Linear block copolymers which may be utilized in the present invention may be represented by the following general formula:

A_{z}-(B-A)_{y}Bₓ

wherein:
A is a block of vinyl aromatic hydrocarbons ;
B is a block of conjugated dienes which has been hydrogenated;
x and z are, independently, 0 or 1; and
y is an integer ranging from 1 to about 15.

Radial polymers which may be utilised in this invention may be represented by the following general formula:

[Bₓ-(A-B)_{y}-A_{z}]ₙ-C_{;}

and

[Bₓ-(A-B)_{y}-A_{z}]ₙ, -C-[B']ₙ",

wherein
A, B, x, y and z are as previously defined;
n is a number from 3 to 30;
C is the core of the radial polymer formed with a polyfunctional coupling agent;
B' is a block of conjugated dienes which B' may be the same or different from B; and
n' and n" are integers representing the number of each type of arm and the sum of n' and n" will be from 3 to 30.

The molecular weights of linear polymers or unassembled linear segments of polymers such as mono-, di-triblock, etc., arms of radial polymers before coupling are conveniently measured by Gel Permeation Chromatography (GPC), where the GPC system has been appropriately calibrated with polystyrene standards of known molecular weight (ASTM 3536).

It is preferred that the A blocks have an apparent weight average molecular weight between 3000 and 70,000 each while the block B preferably each have an apparent weight average molecular weight between 10,000 and 300,000. It is more preferred that the A blocks each have an apparent weight average molecular weight between 5,000 and 50,000, and each B block has an apparent weight average molecular weight between 15,000 and 200,000. It is most preferred that the A blocks each have an apparent weight average molecular weight between 7,000 and 30,000, and each B block has an apparent weight average molecular weight between 45,000 and 120,000.

Blocks A and B may be either homopolymer, random or tapered copolymer blocks as long as each block is predominantly the class of the monomer characterizing the block. For example, the block copolymer may contain A blocks which are styrene/alpha-methylstyrene copolymer blocks or styrene/butadiene random or tapered copolymer blocks as long as the blocks individually predominate in vinyl aromatic hydrocarbons. The blocks are preferably monovinyl monocyclic arenes such as styrene and alphamethylstyrene, and styrene is particularly preferred.

By predominantly being the class of the monomer characterizing the block, it is meant that more than 75% by weight of the A blocks are vinyl aromatic monomer units, and more than 75% by weight of the B blocks are conjugated diene monomer units.

The blocks B may comprise homopolymers of conjugated diene monomers, copolymers of two or more conjugated dienes, and copolymers of one or more of the dienes with a vinyl aromatic hydrocarbon as long as the blocks B are predominantly conjugated diene units. The conjugated dienes preferably contain in the range of from 4 to 8 carbon atoms. Examples of such suitable conjugated diene monomers include: 1,3-butadiene (butadiene), 2-methyl-1,3-butadiene(isoprene), 2,3-dimethyl-1,3-butadiene, 1,3-pentadiene(piperylene) and 1,3-hexadiene; preferred conjugated diene monomers being butadiene and isoprene.

In a further embodiment, the blocks B may comprise a copolymer of a diene and ethylene, for example a copolymer of butadiene and ethylene or isoprene and ethylene.

The vinyl aromatic hydrocarbon blocks, e.g., polystyrene blocks, preferably comprise in the range of from 5 to 50% by weight of the total block copolymer, more preferably comprise from 25 to 35% by weight of the total block copolymer and most preferably comprise from 28 to 32% by weight of the total block copolymer.

The block copolymers for use in the present invention can be prepared using anionic initiators or polymerization catalysts. Such polymers may be prepared using bulk, solution or emulsion techniques.

In general, when solution anionic techniques are used, copolymers of conjugated diene and vinyl aromatic hydrocarbons are prepared by contacting the monomer or monomers to be polymerized simultaneously or sequentially with an anionic polymerization initiator such as group IA metals, their alkyls, amides, silanolates, napthalides, biphenyls or anthracenyl derivatives. It is preferred to use an organoalkali metal (such as sodium or potassium) compound in a suitable solvent at a temperature in the range of from -150°C to 300°C, preferably at a temperature in the range of from 0°C to 100°C. Particularly effective anionic polymerization initiators are organolithium compounds having the general formula:

RLiₙ

wherein R is an aliphatic, cycloaliphatic, aromatic or alkyl-substituted aromatic hydrocarbon radical having in the range of from 1 to 20 carbon atoms and n is an integer of 1 to 4.

The block copolymers may be produced by any well known block polymerization or copolymerization procedure including the well-known sequential addition of monomer techniques, incremental addition of monomer technique or coupling technique. As is well known in the block copolymer art, tapered copolymer blocks can be incorporated in the multiblock copolymer by copolymerizing a mixture of conjugated diene and vinyl aromatic hydrocarbon monomers utilizing the difference in their copolymerization reactivity rates.

The conjugated diene block of the block copolymers of the present invention is hydrogenated. The hydrogenation of the block copolymers may be carried out by a variety of well established processes including hydrogenation in the presence of such catalysts as Raney Nickel, noble metals such as platinum, and palladium and soluble transition metal catalysts. Titanium biscyclopentadienyl catalysts may also be used. Suitable hydrogenation processes which can be used are ones wherein the diene-containing polymer or copolymer is dissolved in an inert hydrocarbon diluent such as cyclohexane and hydrogenated by reaction with hydrogen in the presence of a soluble hydrogenation catalyst Such processes are e.g. disclosed in U.S. Patent Nos. 3,113,986, 4,226,952 and Reissue 27, 145. The polymers are typically hydrogenated in such a manner as to produce hydrogenated block copolymers having a residual unsaturation content in the polydiene block of less than 20%, preferably less than 10%, more preferably less than 5% and most preferably as close to zero percent as possible, of their original ethylenic unsaturation content prior to hydrogenation.

Preferred block copolymers to be employed in the present invention are linear block copolymers having an apparent molecular weight value in the range of from 60,000 to 250,000, more preferably of from 80,000 to 200,000, even more preferably of from 90,000 to 150,000 and most preferably of from 100,000 to 125,000.

Block copolymers which may very conveniently be employed in the present invention are styrene-butadiene-styrene block copolymers and styrene-isoprene-styrene block copolymers, wherein the diene block of the block copolymer has been hydrogenated, with styrene-butadiene-styrene block copolymers being particularly preferred.

A further type of block copolymer that may be preferably employed in the bitumen compositions of the present invention is a styrene-ethylene-butadiene-styrene block copolymer, wherein the conjugated diene block is a copolymer of ethylene and butadiene; it will be recognised by those skilled in the art that after hydrogenation of the ethylene-butadiene mid-block, this type of polymer will closely resemble a styrene-butadiene-styrene block copolymer wherein the diene block has been hydrogenated.

A particularly preferred bitumen composition according to the present invention is a composition wherein the block copolymer is a styrene-butadiene-styrene block copolymer or a styrene-ethylene-butadiene-styrene block copolymer.

Examples of preferred block-copolymers are available from Kraton B.V. under the designation "Kraton G" (Kraton is a trademark), for example Kraton G-1650 and Kraton G-1654.

The bitumen compositions on which the pipe coatings of the present invention are based preferably comprise in the range of from 1 to 10% by weight, more preferably from 2 to 8 % by weight, even more preferably from 3 to 7 % by weight and most preferably from 4 to 6 % by weight of a stereoregular polyolefin, based on total bitumen composition.

Stereoregular polyolefins are substituted polyolefins wherein the monomer units are joined together such that asymmetric carbon atoms along the main carbon chain are orientated in a regular fashion. Generally, stereoregular polyolefins are either described as being isotactic polyolefins i.e. linear-substituted polyolefins in which the substituent groups all lie on one side of the carbon chain; or they are described as being syndiotactic polyolefins i.e. polyolefins exhibiting regular alternation of differences in stereochemical structure.

Iso- and syndiotactic polyolefins may be produced by solid-state catalysts (e.g. Ziegler-Natta catalysts), the chain regularity created by stereospecific sites on the catalyst surface. Stereoregular polyolefins are generally crystalline, unlike atactic polyolefins which are non-crystalline and amorphous.

Preferably the stereoregular polyolefin is a high molecular weight polyolefin.

Stereoregular polyolefins that may be conveniently used in the pipe coatings of the present invention are those having a specific gravity (measured according to ISO test method 1183/A) in the range of from 0.25 to 2, more preferably of from 0.5 to 1 g/cm³; or those having a melt flow index (230 °C; 2.16 Kg :measured according to ISO test method 1133) in the range of from 5 to 12 g/10min, more preferably 5 to 10, and most preferably 7 to 9.

Preferred pipe coatings according to the present invention are those wherein the bitumen composition comprises a stereoregular polyolefin which is an iso- or a syndiotactic polypropylene, polybutylene or polyisoprene; or an iso- or a syndiotactic copolymer of ethylene and propylene, ethylene and butylene, or ethylene and isoprene.

Stereoregular polyolefins which may very conveniently be used in the present invention are isotactic polypropylene and isotactic polypropylene-ethylene copolymer.

An example of a preferred stereoregular polyolefin according to the present invention is available from Montell Polyolefins, UK, under the designation Adflex X 101 H (Adflex is a trade name).

Polyethylene may be of an isotactic configuration, and the stereoregular polyolefin of the present invention may be isotactic polyethylene. However, it is preferred that the bitumen compositions comprise less than 1% by weight of polyethylene, more preferably less than 0.1% of polyethylene and even more preferably less than 0.01% of polyethylene, based on total weight of composition. Most preferably, the bitumen compositions contain no polyethylene.

In the pipe coatings of the present invention the total amount of stereoregular polyolefin and block copolymer of a vinyl aromatic hydrocarbon and a conjugated diene, wherein the diene block of the block copolymer is hydrogenated, present in the bitumen composition is conveniently in the range of from 8 to 16% by weight, based on total bitumen composition, more conveniently in the range of from 10 to 14%, and most conveniently in the range of from 12 to 14%. When greater than 16% by weight of block copolymer and stereoregular polyolefin is employed in the bitumen composition, the viscosity of the bitumen composition is high, and the composition must be heated to inconvenient levels when applied as a pipe coating; when the amount is below 8%, the indentation resistance, shear resistance and soil stress resistance of the pipe coating is reduced.

The pipe coatings of the present invention display a good level of performance without the need for any amorphous or atactic polyolefin to be incorporated, in the bitumen composition. Accordingly, a preferred bitumen composition for use in the present invention comprises less than 1 % by weight of an amorphous or atactic polyolefin, more preferably less than 0.1 %, even more preferably less than 0.01 %, based on total weight of composition. Most preferably, the bitumen compositions contain no amorphous or atactic polyolefin.

The block copolymers and stereoregular polyolefins may be mixed with the bitumen by any conventional method known to those skilled in the art. Conveniently, the block copolymers and stereoregular polyolefins are mixed at a temperature in the range of from 150°C to 200°C, preferably from 160°C to 190°C, for a time of from 1 to 4 hours, preferably 1 to 2 hours.

The bitumen compositions used in the pipe coatings of the present invention may additionally contain up to 50%, preferably in the range of from 1 to 50%, more preferably from 15 to 40%, most preferably 25 to 35% by weight of one or more fillers. For the purposes of the present application the filler is considered to be part of the bitumen composition. Fillers are inert and substantially non-hydroscopic materials. Fillers which may be used are for example, glass fibre, slate powder, talc, and rock flour. Other components including resins, stabilisers or flame retardants may be incorporated. Other polymer modifiers may also be included in the bitumen composition of the invention.

Preferably, filler is added to the bitumen composition after the block copolymer and stereoregular polyolefin have been have been mixed into the composition.

The pipe coatings of the present invention display good impact resistance and flexibility and good high temperature performance without the need for carbon black to be incorporated. This is beneficial as the composition may be readily prepared without the need of a pre-mixing step as for example required to prepare a pipe coating as described in WO 00/55271. Accordingly, a preferred bitumen composition for use in the pipe coatings of the present invention comprises less than 1% by weight of carbon black, more preferably less than 0.1%, even more preferably less than 0.01%, based on total weight of composition. Most preferably, the bitumen compositions contain no carbon black.

The pipe coatings of the present invention show good high temperature performance, preferably having a softening point of at least 100°C (measured according to IP/58), more preferably at least 125°C.

The pipe coatings according to the present invention may be used for coating pipe of any type of material, such as for instance, iron, steel, and other metals and alloys, as well as concrete.

Examples of materials where the pipe coatings according to the invention can be used are steel pipes to be used as pipelines for oil, gas and water.

The present invention further provides a process for coating pipes with a pipe coating according to the present invention. According to this process the pipe coating may be applied directly to the pipe or optionally to a pipe precoated with a primer.

A conventional method of coating pipes starts with priming with a primer followed by application of a bitumen enamel (composition) or a tar enamel, while optionally one or more layers of wrapping material are applied simultaneously to the liquid enamel. The method can be terminated by application of an additional layer of wrapping material. For pipes to be used offshore, a final concrete coating is generally applied for protection of the pipe and for counter-acting buoyancy, especially when said pipe is empty. The present invention further provides a pipe coated with a pipe coating according to the present invention.

The present invention still further provides for the use of a bitumen composition comprising in the range of from 20 to 98% by weight of a bitumen, in the range of from 0.5 to 30% by weight of a block copolymer of a vinyl aromatic hydrocarbon and a conjugated diene which block copolymer comprises at least two terminal poly(monovinyl aromatic hydrocarbon) blocks and at least one central poly(conjugated diene) block wherein the diene block of the block copolymer is hydrogenated, and in the range of from 0.5 to 30% by weight of a stereoregular polyolefin, all weights based on total bitumen composition, as a pipe coating. Bitumen compositions described hereinbefore as being preferred with respect to the pipe coating of the present invention are similarly preferred with respect to said use of a bitumen composition as a pipe coating.

The invention will be further understood from the following illustrative examples. In the examples the various polymers are designated as follows:-

"Kraton G 1650" is a hydrogenated styrene-ethylene-butadiene-styrene linear block copolymer having an apparent molecular weight of 109,000, and a polystyrene content of 30 % wt. Kraton G 1650 was obtained from Kraton B.V. (Kraton is a trade mark).

"Kraton D 1101" is a non-hydrogenated styrene-butadiene-styrene linear block copolymer having an apparent molecular weight of 100,000, and a polystyrene content of 30 % wt. Kraton D 1101 was obtained from Kraton B.V.

"Kraton D 1186" is a non-hydrogenated styrene-butadiene-styrene radial block copolymer having an apparent molecular weight of 380,000 and a polystyrene content of 30 % wt. Kraton D 1186 was obtained from Kraton B.V. (Kraton is a trade mark).

"APP" is an atactic polypropylene obtained from Degussa-Huls A.G. under the designation "Vestoplast" (Vestoplast is a trade name).

"IPO" is a high molecular weight isotactic polyolefin ethylene/propylene copolymer having a specific gravity of 0.89 g/cm³,(ISO 1183/A); a flexural modulus of 80 MPa (ISO 178), a Vitcat softening point of 55 °C (9.81N; ISO 306/A50); and a melt flow rate of 8 g/10min (230 °C, 2.16 KG; ISO 1133); obtained from Montell Polyolefins, UK, under the designation Adflex X 101 H (Adflex is a trade name).

### Examples

Bitumen compositions according to the present invention, and comparative bitumen compositions, were prepared by mixing the required polymers with a bitumen in a high shear mixer. This was done by heating the bitumen to a temperature of 165 °C, adding the block copolymer, mixing, subsequently adding the polyolefin polymer and continuing mixing until a homogenous bitumen/polymer blend was obtained. The temperature during mixing was not allowed to exceed 185°C.

After high shear mixing, the compositions were heated to 180 °C in a low shear mixer and a slate dust filler added and mixed with the bitumen/polymer blend for approximately half an hour.

The bitumen used were:-
Bitumen 1: a hard propane bitumen having a penetration of 13 dmm at 25 °C (BS 2000: Part 49) and a softening point of 60 °C (BS 2000: Part 58).
Bitumen 2: a softer propane bitumen having a penetration of between 60 and 70 dmm at 25 °C (BS 2000: Part 49).

The contents of the bitumen composition of Example 1 and Comparative Examples A and B, and their properties are shown in Table 1.

**Table 1**

| Composition | | | Example 1 | Comp. Example A | Comp. Example B |
|---|---|---|---|---|---|
| Bitumen 1 | | (%wt) | 57.0 | 62.4 | 0 |
| Bitumen 2 | | (%wt) | 0 | 0 | 62.4 |
| Kraton G 1650 | | (%wt) | 8.0 | 0 | 0 |
| Kraton D 1101 | | (%wt) | 0 | 5.0 | 5.0 |
| Kraton D 1186 | | (%wt) | 0 | 3.6 | 3.6 |
| APP | | (%wt) | 0 | 4.0 | 4.0 |
| IPO | | (%wt) | 5.0 | 0 | 0 |
| Filler | | (%wt) | 30.0 | 25.0 | 25.0 |
| Properties | | | | | |
| Softening point | | (°C) | 141.8 | 130.0 | 122.7 |
| Penetration @ 25 °C (dmm) | | | 7 | 13 | 24 |
| Penetration @ 50°C | | (dmm) | 36 | 70 | 86 |
| Viscosity | 170° cP | | NT | 10200 | 9200 |
| | 190°C cP | | NT | 4900 | 4200 |
| | 200°C cP | | 10900 | NS | NS |

| | | | | | |
|---|---|---|---|---|---|
| - NT: not tested - NS: not stable - penetration at 25°C (BS 2000:49) - penetration at 50°C (BS 2000:49) - softening point (BS 2000:58) - viscosity measured using a Brookfield Viscometer | | | | | |

From Table 1 it can be seen that the bitumen composition of Example 1, which comprises a linear hydrogenated block copolymer and an isotactic polyolefin, has both a higher softening point and a lower penetration than that of Comparative Examples A and B, which comprise a mixture of linear and radial non-hydrogenated block copolymer and an atactic polypropylene as disclosed in WO 92/06141. Further, the bitumen composition of Example 1 has a higher viscosity than the comparative examples (the viscosity of Example 1 at 200 °C being similar to that of Comparative Example A at 170 °C) and is stable at temperatures in excess of 200 °C. This is advantageous as the bitumen composition will be less susceptible to sag at high temperature but may be-heated to a-temperature at which it can be applied conveniently as a pipe coating.

The bitumen compositions of Example 1 and comparative Example A where further subjected to performance testing. Impact, bend and sag tests were performed according to British Standard BS 4147, published in 1980, as the "Specification for-bitumen based hot applied coating materials for protecting iron and steel, including suitable primers where required". Indentation testing was performed according to DIN 30672. In this test a probe is inserted into a sample of bitumen composition up to a specified depth and a force applied to the probe for 72 hours. The probe is then-removed from the bitumen composition and the depth of the indentation remaining recorded. The results are shown in Table 2.

**Table 2**

| Test | Example 1 | Comp. Example A |
|---|---|---|
| Impact at -10°C (mm²) | 6100 | 6400 |
| Bend at -10° (mm) | >15 | >15 |
| Sag at 90°C (mm) | NT | 1.0 |
| Sag at 100°C (mm) | 0.5 | NT |
| | | |
| Indent at 3°C; 72 hr (mm) | 0.6 | 1.6 |
| (probe depth/force) (mm/N/mm²) | (3.2/0.25) | (2.5/0.1) |
| | | |
| Indent at 50°C; 72 hr (mm) | 1.3 | 1.3 |
| (probe depth/force) (mm/N/mm²) | (2.5 /0.25) | (2.7/0.1) |

| | | |
|---|---|---|
| Impact: BS 4147; appendix G;(industry min 6500 mm² at 0°C) Bend: BS 4147; appendix F; (industry min 15 mm at 0°C) Sag: BS 4147; appendix E; (industry max 1.5 mm at 70°C) Indent: DIN 30672 | | |

From Table 2 it can be seen that the bitumen composition of Example 1 has excellent impact and bend properties and is less susceptible to sag and indentation than that of comparative Example A.

## Claims

1. A pipe coating which comprises a bitumen composition comprising in the range of from 20 to 98 % by weight of a bitumen, in the range of from 0.5 to 30 % by weight of a block copolymer of a vinyl aromatic hydrocarbon and a conjugated diene which block copolymer comprises at least two terminal poly(monovinyl aromatic hydrocarbon) blocks and at least one central poly(conjugated diene) block wherein the diene block of the block copolymer is hydrogenated, and in the range of from 0.5 to 30% by weight of a stereoregular polyolefin, all weights based on total bitumen composition.

2. A pipe coating as claimed in claim 1, wherein the bitumen composition comprises in the range of from 40 to 80 % by weight of a bitumen, in the range of from 2 to 12 % by weight of a block copolymer of a vinyl aromatic hydrocarbon and a conjugated diene wherein the diene block of the block copolymer is hydrogenated, and in the range of from 2 to 10% by weight of a stereoregular polyolefin.

3. A pipe coating as claimed in claim 1 or claim 2, wherein the bitumen composition further comprises in the range of from 1 to 50% by weight of a filler, based on total bitumen composition

4. A pipe coating as claimed in any one of claims 1 to 3, wherein the block copolymer is a linear block copolymer having an apparent average molecular weight value in the range of from 60,000 to 250,000.

5. A pipe coating as claimed in any one of claims 1 to 4, wherein the block copolymer is a styrene-butadiene-styrene block copolymer.

6. A pipe coating as claimed in any one of claims 1 to 5, wherein the stereoregular polyolefin is an isotactic polyolefin.

7. A pipe coating as claimed in any one of claims 1 to 6, wherein the stereoregular polyolefin is an isotactic polypropylene or an isotactic polypropylene-ethylene copolymer.

8. A pipe coated with a pipe coating as claimed in any one of claims 1 to 7.

9. A process for coating pipes in a pipe coating as claimed in any one of claims 1 to 7.

10. Use of a bitumen composition comprising in the range of from 20 to 98% by weight of a bitumen, in the range of from 0.5 to 30% by weight of a block copolymer of a vinyl aromatic hydrocarbon and a conjugated diene which block copolymer comprises at least two terminal poly(monovinyl aromatic hydrocarbon) blocks and at least one central poly(conjugated diene) block wherein the diene block of the block copolymer is hydrogenated, and in the range of from 0.5 to 30% by weight of a stereoregular polyolefin, all weights based on total bitumen composition, as a pipe coating.

## Patentansprüche

1. Rohrbeschichtung umfassend eine Bitumenzusammensetzung umfassend ein Bitumen im Bereich von 20 bis 98 Gewichtsprozent, ein Blockcopolymer eines vinyl-aromatischen Kohlenwasserstoffs und eines konjungierten Diens im Bereich von 0,5 bis 30 Gewichtsprozent, wobei das Blockcopolymer mindestens zwei terminale Poly(monovinylaromatischer Kohlenwasserstoff)blöcke und mindestens einen zentralen Poly(konjungiertes Dien)block umfasst, wobei der Dien-Block des Blockcopolymers hydriert ist, und ein stereoregulares Polyolefin im Bereich von 0,5 bis 30 Gewichtsprozent, wobei alle Gewichte auf die gesamte Bitumenzusammensetzung bezogen sind.

2. Rohrbeschichtung wie in Anspruch 1 beansprucht, wobei die Bitumenzusammensetzung ein Bitumen im Bereich von 40 bis 80 Gewichtsprozent, ein Blockcopolymer eines vinylaromatischen Kohlenwasserstoffs und eines konjungierten Diens im Bereich von 2 bis 12 Gewichtsprozent, wobei der Dienblock des Blockcopolymers hydriert ist, und ein stereoregulares Polyolefin im Bereich von 2 bis 10 Gewichtsprozent, umfasst.

3. Rohrbeschichtung wie in Anspruch 1 oder Anspruch 2 beansprucht, wobei die Bitumenzusammensetzung des Weiteren einen Füllstoff im Bereich von 1 bis 50 Gewichtsprozent, basierend auf der gesamten Bitumenzusammensetzung umfasst.

4. Rohrbeschichtung wie in einem beliebigen der Ansprüche 1 bis 3 beansprucht, wobei das Blockcopolymer ein lineares Blockcopolymer ist mit einem apparenten Durchschnittsmolekulargewichtswert im Bereich von 60.000,00 bis 250.000,00.

5. Rohrbeschichtung wie in einem beliebigen der Ansprüche 1 bis 4 beansprucht, wobei das Blockcopolymer ein Styrol-Butadien-Styrol-Blockcopolymer ist.

6. Rohrzusammensetzung wie einem beliebigen der Ansprüche 1 bis 5 beansprucht, wobei das stereoregulare Polyolefin ein isotaktisches Polyolefin ist.

7. Rohrbeschichtung wie in einem beliebigen der Ansprüche 1 bis 6 beansprucht, wobei das stereoregulare Polyolefin ein isotaktisches Polypropylen oder ein isotaktisches Polypropylen-Ethylen-Copolymer ist.

8. Rohr, das mit einer Rohrbeschichtung wie in einem beliebigen der Ansprüche 1 bis 7 beansprucht beschichtet ist.

9. Verfahren zum Beschichten von Rohren mit einer Rohrbeschichtung wie in einem beliebigen der Ansprüche 1 bis 7 beansprucht.

10. Verwendung einer Bitumenzusammensetzung umfassend ein Bitumen im Bereich von 20 bis 98 Gewichtsprozent, ein Blockcopolymer eines vinylaromatischen Kohlenwasserstoffs und eines konjungierten Diens im Bereich von 0,5 bis 30 Gewichtsprozent, wobei das Blockcopolymer mindestens zwei terminale Poly(monovinylaromatischer Kohlenwasserstoff)blöcke und mindestens einen zentralen Poly(konjungiertes Dien)block, wobei der Dien-Block des Blockcopolymers hydriert ist und ein stereoregulares Polyolefin im Bereich von 0,5 bis 30 Gewichtsprozent umfasst, wobei alle Gewichte auf die gesamte Bitumenzusammensetzung bezogen sind, als eine Rohrbeschichtung.

## Revendications

1. Revêtement de conduit qui comprend une composition de bitume comprenant du bitume dans la plage comprise entre 20 et 98 % en poids, un copolymère bloc d'un hydrocarbure aromatique vinylique et d'un diène conjugué dans la plage comprise entre 0,5 et 30 % en poids ledit copolymère bloc comprenant au moins deux blocs poly(hydrocarbure aromatique monovinylique) terminaux et au moins un bloc poly(diène conjugué) central dans lequel le bloc diène du copolymère bloc est hydrogéné, et une polyoléfine stéréorégulière dans la plage comprise entre 0,5 et 30 % en poids, tous les poids étant basés sur une composition de bitume totale.

2. Revêtement de conduit selon la revendication 1, dans lequel la composition de bitume comprend du bitume dans la plage comprise entre 40 et 80 % en poids, un copolymère bloc d'un hydrocarbure aromatique vinylique et d'un diène conjugué dans la plage comprise entre 2 et 12 % en poids dans lequel le bloc diène du copolymère bloc est hydrogéné, et une polyoléfine stéréorégulière dans la plage comprise entre 2 et 10 % en poids.

3. Revêtement de conduit selon la revendication 1 ou la revendication 2, dans lequel la composition de bitume comprend en outre une charge dans la plage comprise entre 1 et 50 % en poids, sur la base de la composition de bitume totale.

4. Revêtement de conduit selon l'une quelconque des revendications 1 à 3, dans lequel le copolymère bloc est un copolymère bloc linéaire présentant une valeur de poids moléculaire moyen apparent dans la plage comprise entre 60 000 et 250 000.

5. Revêtement de conduit selon l'une quelconque des revendications 1 à 4, dans lequel le copolymère bloc est un copolymère bloc styrène-butadiène-styrène.

6. Revêtement de conduit selon l'une quelconque des revendications 1 à 5, dans lequel la polyoléfine stéréorégulière est une polyoléfine isotactique.

7. Revêtement de conduit selon l'une quelconque des revendications 1 à 6, dans lequel la polyoléfine stéréorégulière est un polypropylène isotactique ou un copolymère polypropylène-éthylène isotactique.

8. Conduit revêtu d'un revêtement de conduit selon l'une quelconque des revendications 1 à 7.

9. Processus pour revêtir des conduits dans un revêtement de conduit selon l'une quelconque des revendications 1 à 7.

10. Utilisation d'une composition de bitume comprenant du bitume dans la plage comprise entre 20 et 98 % en poids, un copolymère bloc d'un hydrocarbure aromatique vinylique et d'un diène conjugué dans la plage comprise entre 0,5 et 30 % en poids ledit copolymère bloc comprenant au moins deux blocs poly(hydrocarbure aromatique monovinylique) terminaux et au moins un bloc poly(diène conjugué) central dans lequel le bloc diène du copolymère bloc est hydrogéné, et une polyoléfine stéréorégulière dans la plage comprise entre 0,5 et 30 % en poids, tous les poids étant basés sur une composition de bitume totale, comme revêtement de conduit.
